# EUROPEAN PATENT APPLICATION

(11) **EP 4 503 309 A1**
(43) Date of publication of application: **05.02.2025**
(21) Application number: 23882966.7
(22) Date of filing: 13.10.2023
(51) Int. Cl.: H01M 50/46, H01M 50/446, H01M 50/414, H01M 50/431, H01M 10/052, H01M 50/491, H01M 50/426, H01M 50/42

(54) **INTEGRATED ELECTRODE/SEPARATOR FOR LITHIUM SECONDARY BATTERY, AND LITHIUM SECONDARY BATTERY COMPRISING SAME**

(30) Priority: 28.10.2022 KR 20220141272; 26.09.2023 KR 20230129785
(71) Applicant: LG Chem, Ltd., Yeongdeungpo-gu Seoul 07336 (KR)
(72) Inventor: PARK, Youngjin, Daejeon 34122 (KR); KIM, Daeho, Daejeon 34122 (KR); LEE, Seung Heon, Daejeon 34122 (KR); KOO, Beom Mo, Daejeon 34122 (KR)
(74) Representative: Hoffmann Eitle
(86) International application number: PCT/KR2023/015787
(87) International publication number: WO 2024/090859

(57) **Abstract**

The present invention relates to an electrode-integrated separator for a lithium ion secondary battery and a lithium ion secondary battery comprising the same. According to the present invention, an electrode assembly which has excellent bonding durability between the separator and electrodes without impairing ionic conductivity between electrodes, and a lithium ion secondary battery including the same are provided.

## Description

### [TECHNICAL FIELD]

### CROSS-REFERENCE TO RELATED APPLICATION(S)

This application claims the benefit of Korean Patent Application No. 10-2022-0141272 filed on October 28, 2022 and Korean Patent Application No. 10-2023-0129785 filed on September 26, 2023 in the Korean Intellectual Property Office, the disclosures of which are incorporated herein by reference in their entirety.

The present invention relates to an electrode-integrated separator for a lithium ion secondary battery and a lithium ion secondary battery comprising the same.

### [BACKGROUND OF ART]

As mobile phones, notebook computers, tablet computers, mobile batteries, electric vehicles, personal mobility devices, and the like become highly functional, the demand for a secondary battery serving as a driving power source thereof is steadily increasing. Particularly, lithium secondary batteries, which have high operating voltage and high energy density per unit weight, are most frequently used.

A lithium ion secondary battery is configured such that an electrode assembly having a positive electrode/separator/negative electrode structure, which can be charged and discharged, is mounted in a battery case. The positive electrode and the negative electrode are manufactured by coating a slurry containing an electrode active material onto one surface or both surfaces of a metal current collector, followed by drying and rolling.

The separator is one of the most important factors determining the lifespan of a secondary battery, and electrically isolates the positive electrode and the negative electrode. Further, the separator is required to have ion permeability and mechanical strength such that an electrolytic solution can pass smoothly through the separator. As the applications of high-energy lithium secondary batteries are expanded, the safety of the separator at high temperature is also increasingly needed.

A separator comprising a separator substrate, which is conventionally used, and an inorganic coating layer has a problem in that the force of adhesion between the separator and an electrode is not sufficient due to its material characteristics, whereby there is a problem that partial detachment or wrinkles occur at the interface between the electrode and the separator. Polyolefin, which is generally used as the separator substrate, has a problem with thermal stability in which polyolefin melts at a high temperature.

In order to solve these problems, a method of eliminating a polyolefin separator substrate and constructing a separator using only an inorganic coating film has been proposed. However, such a separator still do not have sufficient adhesive force with electrodes, and have extremely low insulating properties, which is thus vulnerable to internal short circuits when applying to an electrochemical device. In addition, such a separator have a fatal drawback that the separator is easily torn due to its low tensile strength and drawing rate, and a fine short circuit occurs inside the electrode assembly.

### [DETAILED DESCRIPTION OF THE INVENTION]

### [Technical Problem]

It is an object of the present invention to provide an electrode-integrated separator for a lithium ion secondary battery which has excellent bonding durability between the separator and electrodes without impairing ionic conductivity between electrodes.

It is another object of the present invention to provide a lithium ion secondary battery comprising the electrode-integrated separator.

### [Technical Solution]

According to one embodiment of the invention, there is provided an electrode-integrated separator for a lithium ion secondary battery comprising:
an electrode portion including an electrode active material layer stacked on an electrode current collector;
an adhesive portion pattern formed on the electrode active material layer; and
a porous layer that is tightly bonded to the electrode active material layer through the adhesive portion pattern, and includes a polymer binder and inorganic fine particles dispersed in the polymer binder.

According to another embodiment of the invention, there is provided a lithium ion secondary battery comprising the above-mentioned electrode-integrated separator.

Now, an electrode-integrated separator for a lithium ion secondary battery and a lithium ion secondary battery comprising the same according to embodiments of the invention will be described in more detail.

Terms or words used in the present specification and claims should not be construed as limited to ordinary or dictionary terms, and the present invention should be construed with meanings and concepts that are consistent with the technical idea of the present disclosure based on the principle that the inventors can appropriately define concepts of the terms to appropriately describe their own invention in the best way.

Unless defined otherwise, all technical and scientific terms used herein have the same meaning as commonly understood by one of ordinary skill in the art to which this invention belongs. The terms used herein are for the purpose of describing specific embodiments only and is not intended to limit the scope of the invention.

The singular forms "a," "an" and "the" used herein are intended to include plural forms, unless the context clearly indicates otherwise.

It should be understood that the terms "comprise," "include", "have", etc. are used herein to specify the presence of stated feature, region, integer, step, action, element and/or component, but do not preclude the presence or addition of other feature, region, integer, step, action, element, component and/or group.

While the present invention can be modified in various ways and take on various alternative forms, specific embodiments thereof are illustrated and described in detail below. However, it should be understood that there is no intent to limit the present invention to the particular forms disclosed, but on the contrary, the present invention covers all modifications, equivalents, and alternatives falling within the spirit and scope of the present invention.

In describing a position relationship, for example, when the position relationship is described as 'upon~', 'above~', 'below~', and 'next to~', one or more other portions may be arranged between two portions unless 'just' or 'direct' is used.

In describing a time relationship, for example, when the temporal order is described as 'after~', 'subsequent~', 'next~', and 'before~', a case which is not continuous may be included unless 'just' or 'direct' is used.

As used herein, the term 'at least one' should be understood to include any and all combinations of one or more of the associated listed items.

In the present invention, any one layer being bonded with another layer "through" another layer means that one layer and the other layer are stacked and bonded by the other layer interposed in at least a partial region between the one layer and the other layer.

In the present invention, any one layer being "tightly bonded" to another layer through another layer means that the layers are stacked and bonded through the other layer without any empty space between the one layer and the other layer.

According to one embodiment of the invention, there is provided an electrode-integrated separator for a lithium ion secondary battery comprising:
an electrode portion including an electrode active material layer stacked on an electrode current collector;
an adhesive portion pattern formed on the electrode active material layer; and
a porous layer that is tightly bonded to the electrode active material layer through the adhesive portion pattern, and includes a polymer binder and inorganic fine particles dispersed in the polymer binder.

As a result of intensive research, the present inventors have found that a lithium ion secondary battery satisfying the above configuration can exhibit excellent bonding durability between the separator and electrodes without impairing ionic conductivity between electrodes.

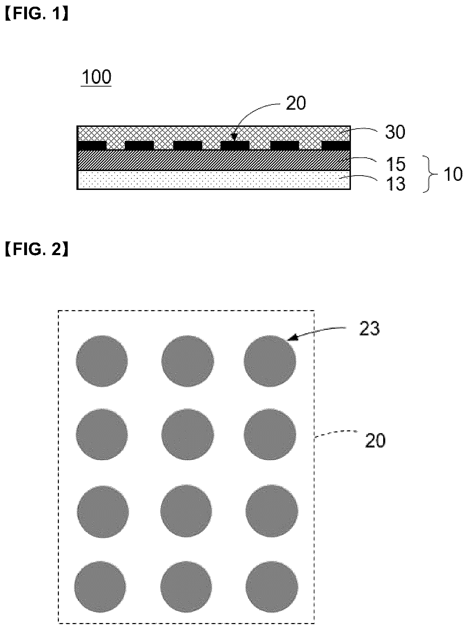

FIG. 1 is a cross-sectional view of an electrode-integrated separator for a lithium secondary battery according to an embodiment of the invention.

Referring to FIG. 1, the electrode-integrated separator 100 for a lithium ion secondary battery according to an embodiment of the invention includes an electrode portion 10 including an electrode active material layer 15 stacked on an electrode current collector 13; an adhesive portion pattern 20 formed on the electrode active material layer 15; and a porous layer 30 that is tightly bonded to the electrode active material layer 15 through the adhesive portion pattern 20.

In particular, the electrode-integrated separator 100 for a lithium ion secondary battery has a structure in which the porous layer 30 is tightly bonded to the electrode active material layer 15 of the electrode portion unit 10 through the adhesive portion pattern 20. Accordingly, the electrode-integrated separator 100 for a lithium ion secondary battery can exhibit excellent bonding durability between the porous layer 30 and the electrode portion 10 while exhibiting excellent thermal stability and ionic conductivity between electrodes.

According to one embodiment of the invention, the electrode portion 10 may be a negative electrode potion and a positive electrode portion.

The electrode portion 10 can be obtained by coating an electrode material containing a mixture of an electrode active material, a conductive material and a binder onto the electrode current collector 13 and then drying the electrode material to form an electrode active material layer 15.

As the electrode current collector, those known in the technical field to which the present invention belongs to have conductivity without causing a chemical change in the lithium ion secondary battery can be used. In one example, the electrode current collector may include stainless steel; aluminum; nickel; titanium; fired carbon; or aluminum or stainless steel whose surface is treated with carbon, nickel, titanium, silver, or the like.

Preferably, the electrode collector may generally have a thickness of 3 *µ*m to 500 *µ*m. The electrode current collector may have fine protrusions and depressions formed on a surface thereof to enhance an adhesive force with an electrode active material. The electrode current collector may be used in various forms such as a film, a sheet, a foil, a net, a porous body, a foaming body, and a non-woven fabric structure.

The conductive material can be used for imparting electronic conductivity to the electrode.

The conductive material can be used without particular limitation as long as it has electronic conductivity without causing a chemical change in the lithium ion secondary battery. As a non-limiting example, the conductive material may include carbon-based materials such as carbon black, acetylene black, ketjen black, channel black, furnace black, lamp black, thermal black and carbon fiber; graphite such as natural graphite and artificial graphite; metal powder or metal fibers such as copper, nickel, aluminum and silver; conductive whiskey such as zinc oxide and potassium titanate; conductive metal oxides such as titanium oxide; or a conductive polymer such as a polyphenylene derivative. As the conductive material, any one alone or a mixture of two or more of the above-mentioned examples may be used.

The content of the conductive material may be adjusted within a range that does not cause a decrease in capacity of the battery while exhibiting an appropriate level of conductivity. Preferably, the content of the conductive material may be 1% by weight to 10% by weight, or 1% by weight to 5% by weight based on the total weight of the electrode material.

The binder is used for properly attaching the electrode material to the electrode current collector.

As a non-limiting example, the binder may include polyvinyl alcohol, polyacrylate, carboxymethyl cellulose, hydroxypropyl cellulose, diacetylcellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon resin, and the like. As the binder, one or a mixture of two or more of the examples described above may be used.

The content of the binder may be adjusted within a range that does not cause a decrease in capacity of the battery while exhibiting an appropriate level of adhesive property. Preferably, the content of the binder may be 1% by weight to 10% by weight, or 1% by weight to 5% by weight based on the total weight of the electrode material.

When the electrode portion 10 is a positive electrode portion, the positive electrode active material can be used without particular limitation as long as it is a material capable of reversibly intercalating/deintercalating lithium ions.

In one example, the positive electrode active material may be a composite oxide or phosphate containing cobalt, manganese, nickel, iron, or a combination of lithium and these metals.

In another example, the positive electrode active material may be a compound represented by any one of the following chemical formulas: LiₐA_{1-b}R_{b}D₂ (0.90≤a≤1.8, 0≤b≤0.5); LiₐE_{1-b}R_{b}O_{2-c}Dₒ (0.90≤a≤1.8, 0≤b≤0.5, 0≤c≤0.05); LiE_{2-b}R_{b}O_{4-c}Dₒ (0≤b≤0.5, 0≤c≤0.05); LiₐNi_{1-b-c}Co_{b}R_{c}D_{d} (0.90≤a≤1.8, 0≤b≤0.5, 0≤c≤0.05, 0<d≤2); LiₐNi_{1-b-c}Co_{b}R_{c}O_{2-d}Z_{d} (0.90≤a≤1.8, 0≤b≤0.5, 0≤c≤0.05, 0<d<2); LiₐNi_{1-b-c}Co_{b}R_{c}O_{2-d}Z₂ (0.90≤a≤1.8, 0≤b≤0.5, 0≤c≤0.05, 0<d<2); LiₐNi_{1-b-c}Mn_{b}R_{c}D_{d} (0.90≤a≤1.8, 0≤b≤0.5, 0≤c≤0.05, 0<d≤2); LiₐNi_{1-b-c}Mn_{b}R_{c}O_{2-d}Z_{d} (0.90≤a≤1.8, 0≤b≤0.5, 0≤c≤0.05, 0<d<2); LiₐNi_{1-b-c}Mn_{b}R_{c}O_{2-d}Z₂ (0.90≤a≤1.8, 0≤b≤0.5, 0≤c≤0.05, 0<d<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}Mn_{b}GₑO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8,0.001≤b≤0.1); LiₐCoG_{b}O₂ (0.90≤a≤1.8,0.001≤b≤0.1);LiₐMnG_{b}O₂ (0.90≤a≤1.8,0.001≤b≤0.1); LiₐMn₂G_{b}O₄ (0.90≤a≤1.8,0.001≤b≤0.1);QO₂; QS₂; LiQS₂; V₂O₅; LiV₂O₅; LiTO₂; LiNiVO₄; Li_{(3-f)}J₂(PO₄)₃ (0≤f≤2); Li_{(3-f)}Fe₂(PO₄)₃ (0≤f≤2); and LiFePO₄.

In the above chemical formulas, A is Ni, Co, Mn or a combination thereof; R is Al, Ni, Co, Mn, Cr, Fe, Mg, Sr, V, a rare earth element or a combination thereof; D is O, F, S, P or a combination thereof; E is Co, Mn or a combination thereof; Z is F, S, P or a combination thereof; G is Al, Cr, Mn, Fe, Mg, La, Ce, Sr, V or combinations thereof; Q is Ti, Mo, Mn or a combination thereof; T is Cr, V, Fe, Sc, Y or a combination thereof; and J is V, Cr, Mn, Co, Ni, Cu or combinations thereof.

Those having a coating layer on the surface of the positive electrode active material can be used, or a mixture of the positive electrode active material and a positive electrode active material having a coating layer can be used. As the coating element included in the coating layer, Mg, Al, Co, K, Na, Ca, Si, Ti, V, Sn, Ge, Ga, B, As, Zr, or a mixture thereof can be used.

According to one embodiment, the positive electrode active material may be contained in an amount of 80% to 95% by weight based on the total weight of the electrode material. Preferably, the content of the positive electrode active material may be 82% by weight to 95% by weight, or 82% by weight to 93% by weight, or 85% by weight to 93% by weight, or 85% by weight to 90% by weight, based on the total weight of the electrode material.

When the electrode portion 10 is a negative electrode portion, the negative electrode active material may include a material capable of reversibly intercalating and deintercalating lithium ions, a lithium metal, a lithium metal alloy, a material capable of doping and dedoping lithium, and a transition metal oxide.

As the material capable of reversibly intercalating and de-intercalating lithium ions, crystalline carbon, amorphous carbon, or a mixture thereof may be exemplified as a carbonaceous material. Specifically, the carbonaceous material may be natural graphite, artificial graphite, Kish graphite, pyrolytic carbon, mesophase pitches, mesophase pitch-based carbon fiber, meso-carbon microbeads, petroleum or coal tar pitch derived cokes, soft carbon, hard carbon, and the like.

The lithium metal alloy may include an alloy of lithium and a metal selected from the group consisting of Na, K, Rb, Cs, Fr, Be, Mg, Ca, Sr, Si, Sb, Pb, In, Zn, Ba, Ra, Ge, Al, Sn, Bi, Ga, and Cd.

The material capable of doping and dedoping lithium may include Si, a Si-C composite, SiOₓ (0<x<2), a Si-Q alloy (wherein Q is an element selected from the group consisting of alkali metals, alkali earth metals, group 13 elements, group 14 elements, group 15 elements, group 16 elements, transition metals, rare earth elements, and a combination thereof, but is not Si), Sn, SnO₂, Sn-R (wherein R is an element selected from the group consisting of alkali metals, alkali earth metals, group 13 elements, group 14 elements, group 15 elements, group 16 elements, transition metals, rare earth elements, and a combination thereof, but is not Sn), and the like. In addition, as the material capable of doping and dedoping lithium, at least one of the above examples can also be mixed with SiO₂ and then used. The Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and the like.

And, the transition metal oxide may include vanadium oxide, lithium vanadium oxide, lithium titanium oxide, and the like.

Preferably, the negative electrode active material may include one or more compounds selected from the group consisting of a carbonaceous material and a silicon compound. Here, the carbonaceous material is a material containing at least one selected from the group consisting of natural graphite, artificial graphite, Kish graphite, pyrolytic carbon, mesophase pitches, mesophase pitch-based carbon fiber, meso-carbon microbeads, petroleum or coal tar pitch derived cokes, soft carbon, and hard carbon, as previously exemplified. **In** addition, the silicon compound may be a compound containing Si previously exemplified, that is, Si, a Si-C composite, SiOx (wherein 0<x<2), the Si-Q alloy, mixtures thereof, or a mixture of at least one thereof and SiO₂.

According to one embodiment, the negative electrode active material may be contained in an amount of 85% by weight to 98% by weight based on the total weight of the electrode material. Preferably, the content of the negative electrode active material may be 85% by weight to 97% by weight, or 87% by weight to 97% by weight, or 87% by weight to 95% by weight, or 90% by weight to 95% by weight based on the total weight of the negative electrode material.

Meanwhile, the electrode-integrated separator 100 for a lithium ion secondary battery includes an adhesive portion pattern 20 formed on the electrode active material layer 15 of the electrode portion 10.

The adhesive portion pattern 20 is a pattern in which a plurality of adhesive portion units are arranged at predetermined intervals. The adhesive portion pattern 20 is formed on the electrode active material layer 15 to improve bonding durability between the porous layer 30 and the electrode portion 10.

According to one embodiment, the adhesive portion pattern 20 may have a form including two or more or four or more adhesive portion units.

In order to achieve the effect of improving the bonding durability between the porous layer 30 and the electrode portion 10 through the introduction of the adhesive portion pattern 20, the adhesive portion pattern 20 preferably includes two or more or four or more adhesive portion units. The upper limit of the number of the adhesive portion units included in the adhesive portion pattern is not particularly limited because it can be appropriately adjusted according to the ratio of the area of the electrode portion to the area occupied by the adhesive portion pattern.

According to one embodiment, the adhesive portion units may each independently have one or more transversal cross-sectional shapes selected from the group consisting of a circle, an ellipse, a sector, a polygon, and a concave polygon.

FIGS. 2 to 6 are transversal cross-sectional views of adhesive portion patterns according to embodiments of the invention, respectively.

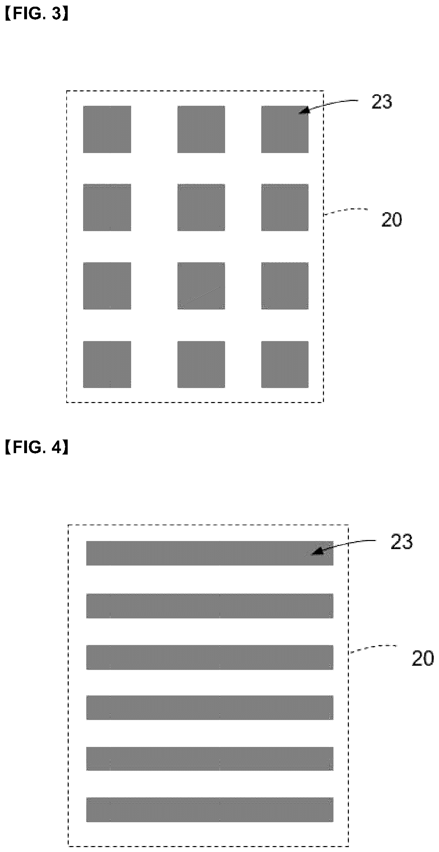

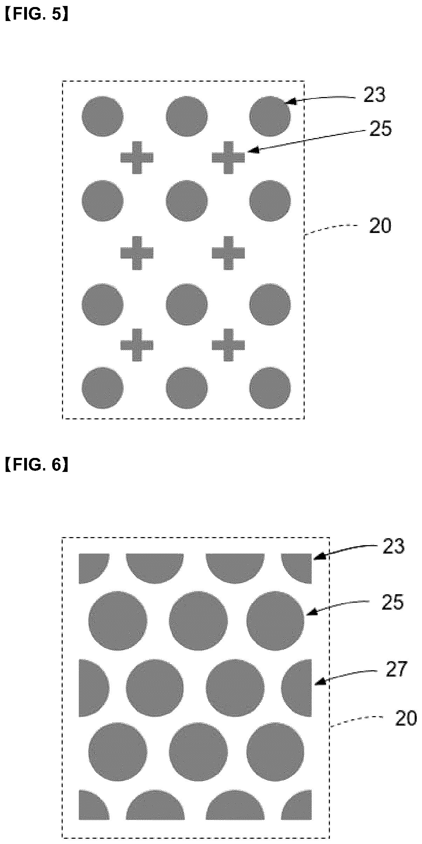

The adhesive portion pattern 20 shown in FIG. 2 is composed of adhesive portion units 23 having a circular cross section. The adhesive portion pattern 20 shown in FIG. 3 is composed of adhesive portion units 23 having a square cross section. The adhesive portion pattern 20 shown in FIG. 4 is a pattern in which adhesive portion units 23 having a rectangular cross-section are arranged in a stripe shape. The adhesive portion pattern 20 shown in FIG. 5 is composed of adhesive portion units 23 having a circular cross section and adhesive portion units 25 having a cross-shaped cross section. The adhesive portion pattern 20 shown in FIG. 6 is composed of adhesive portion units 23 having a quarter-circular cross section, adhesive portion units 25 having a circular cross section, and adhesive portion units 27 having a semi-circular cross section. FIGS. 2 to 6 illustrate a part of the adhesive portion pattern, in which the adhesive portion pattern may expand according to the area of the electrode active material, and the number of adhesive portion units may increase.

According to one embodiment, in order to exhibit uniform bonding durability through the introduction of the adhesive portion pattern, the adhesive portion pattern 20 is preferably a pattern in which the center part of each adhesive portion unit is arranged at equal intervals.

Here, the center part of the adhesive portion unit may be determined based on its transversal cross section. In one example, the center part of a circular cross section is the center of a circle. In another example, the center part of an elliptical cross section is a point where the major axis and minor axis of the ellipse intersect. In yet another example, the center part of a sector-shaped cross section such as a quarter-circle or a semi-circle may be the center of a circle being inscribed in the transversal cross section. In yet another example, the center part of a transversal cross section that is a polygon or concave polygon may be the center of a circle being circumscribed to the transversal cross section.

According to one embodiment, the adhesive portion pattern 20 may include adhesive portion units that have two or more transversal cross-sectional shapes selected from the group consisting of a circle, an ellipse, a sector, a polygon, and a concave polygon.

Here, the adhesive portion units having mutually the same cross-sectional shape may be configured such that the center parts thereof are arranged at equal intervals. In one example, in FIG. 5, the adhesive portion units 23 having a circular cross section are arranged at equal intervals based on the center part thereof. And, independently, the adhesive portion units 25 having a cross-shaped cross section are arranged at equal intervals based on the center part thereof.

According to one embodiment, the adhesive portion units in the adhesive portion pattern 20 are arranged at intervals such that the distance between the center parts of each adhesive portion unit is 100 *µ*m to 1500 *µ*m.

Specifically, the arrangement distance of the adhesive portion units is 100 *µ*m or more, or 250 *µ*m or more, or 500 *µ*m or more; and 1500 *µ*m or less, or 1200 *µ*m or less, or 1000 *µ*m or less based on the distance between the center parts of each adhesive portion unit.

Preferably, the adhesive portion units may be arranged at intervals such that the distance between the center parts of each adhesive portion unit is 100 *µ*m to 1500 *µ*m, or 250 *µ*m to 1500 *µ*m, or 250 *µ*m to 1200 *µ*m, or 500 *µ*m to 1200 *µ*m, or 500 *µ*m to 1000 *µ*m.

According to one embodiment, the transversal cross section of the adhesive portion units may have a major axis diameter of 20 *µ*m to 5000 *µ*m.

Here, the major axis diameter may be determined as follows based on the transversal cross-sectional shape of the adhesive portion units. In one example, the major axis diameter of a circular cross section means the diameter of the circle. In another example, the major axis diameter of an elliptical cross section means the major axis length of the ellipse. In another example, the major axis diameter of a sector-shaped cross section such as a quarter-circle or a semi-circle means the length of a line segment connecting two points where two radii and an arc meet. Alternatively, it may mean the radius of a quarter circle or the diameter of a semicircle. In yet another example, the major axis diameter of a transversal cross section that is a polygon or concave polygon means the diameter of a circle circumscribed to the transversal cross section.

Specifically, the transversal cross section of the adhesive portion units may have a major axis diameter of 20 *µ*m or more, or 100 *µ*m or more, or 200 *µ*m or more; and 5000 *µ*m or less, or 4000 *µ*m or less, or 3000 *µ*m or less.

Preferably, the transversal cross section of the adhesive portion units may have a major axis diameter of 20 *µ*m to 5000 *µ*m, or 100 *µ*m to 5000 *µ*m, or 100 *µ*m to 4000 *µ*m, or 200 *µ*m to 4000 *µ*m, or 200 *µ*m to 3000 *µ*m.

According to one embodiment, in the adhesive portion pattern 20, the distance between the center parts of the adhesive portion units and the major axis diameter of the transversal cross section may be determined within the above-mentioned range according to the ratio of the area occupied by the adhesive portion pattern.

According to one embodiment, the adhesive portion pattern 20 is preferably formed at an area ratio of 15% to 50% based on the total area of the electrode active material layer 15.

Specifically, the ratio of the area occupied by the adhesive portion pattern 20 is 15% or more, or 16% or more, or 17% or more; and 50% or less, or 49% or less, or 48% or less based on the total area of the electrode active material layer 15.

In order to exhibit the effect of improving the bonding durability between the porous layer 30 and the electrode portion 10 through the introduction of the adhesive portion pattern 20, the ratio of the area occupied by the adhesive portion pattern 20 is preferably 15% or more, 16% or more, or 17% or more based on the total area of the electrode active material layer.

As the ratio of the area occupied by the adhesive portion pattern 20 is higher, the more excellent bonding durability can be exhibited, but the ionic conductivity between electrodes may be decreased, which may lead to a decrease in the capacity of the lithium ion secondary battery. Therefore, the ratio of the area occupied by the adhesive portion pattern is preferably 50% or less, or 49% or less, or 48% or less based on the total area of the electrode active material layer.

Preferably, the adhesive portion pattern 20 may be formed with an area ratio of 15% to 50%, or 16% to 50%, or 16% to 49%, or 17% to 49%, or 17% to 48% based on the total area of the electrode active material layer 15.

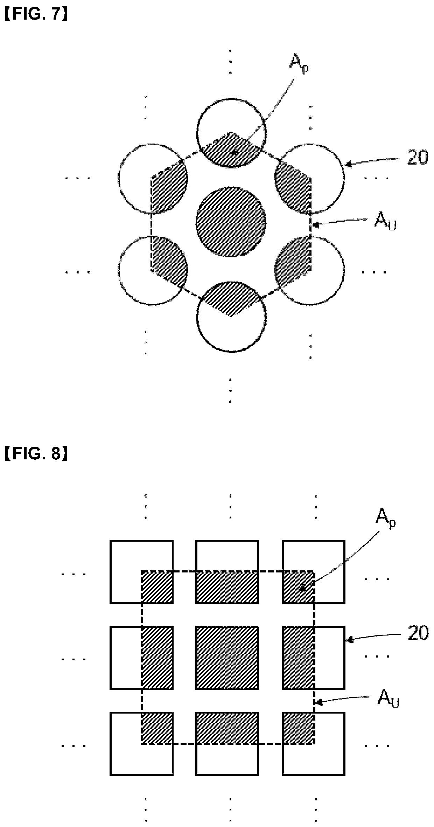

As an example, referring to FIGS. 7 and 8, the area ratio of the adhesive portion pattern 20 may be calculated as a percentage of the area (A_{P}) occupied by the adhesive portion pattern within the unit area (A_{U}).

According to one embodiment, the material of the adhesive portion pattern preferably has adhesive properties suitable for bonding the electrode active material layer 15 and the porous layer 30 while being electrochemically stable.

In one example, a binder used for forming the positive electrode active material layer and the negative electrode active material layer can be used as the adhesive portion.

Preferably, the adhesive portion may be one or more selected from the group consisting of polyvinyl alcohol, polyacrylate, carboxymethyl cellulose, hydroxypropyl cellulose, diacetylcellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, and nylon resin.

Further, the polymer binder for forming the porous layer may be applied to the adhesive portion. For example, the adhesive portion pattern may include one or more selected from the group consisting of polyvinylidene fluoride, poly(vinylidene fluoride-hexafluoropropylene), poly(vinylidene fluoride-trichloroethylene), poly(vinylidene fluoride-chlorotrifluoroethylene), polymethyl methacrylate, polyacrylonitrile, polyvinylpyrrolidone, polyvinyl acetate, ethylene vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pullulan, carboxymethyl cellulose, acrylonitrile-styrene-butadiene copolymer, ethylene-propylene-diene terpolymer, sulfonated ethylene-propylene-diene terpolymer, styrene butadiene rubber, fluororubber, and polyimide.

According to one embodiment, the thickness of the adhesive portion pattern 20 is preferably adjusted in the range of 0.1 *µ*m to 10 *µ*m, or 0.1 *µ*m to 5 *µ*m, or 0.5 *µ*m to 5 *µ*m, or 0.5 *µ*m to 2 *µ*m in order to exhibit appropriate performance.

The method of forming the adhesive portion pattern 20 on the electrode active material layer 15 may be performed by methods such as coating, dispensing, transferring, depositing, printing, and spraying. In one example, the adhesive portion pattern 20 may be formed using methods such as gravure printing, micro gravure printing, and offset printing.

Meanwhile, the electrode-integrated separator 100 for a lithium ion secondary battery includes a porous layer 30 that is tightly bonded to the electrode active material layer 15 through the adhesive portion pattern 20.

Referring to FIG. 1, the porous layer 30 is stacked and bonded via the adhesive portion pattern 20 without an empty space between the porous layer 30 and the electrode active material layer 15. Accordingly, the electrode-integrated separator 100 for a lithium ion secondary battery can exhibit excellent bonding durability between the porous layer 30 and the electrode portion 10 without impairing ionic conductivity between the counter electrode (not shown) to be stacked on the porous layer 30 and the electrode portion 10.

According to one embodiment, the porous layer 30 includes a polymer binder and inorganic fine particles dispersed in the polymer binder.

The polymer binder is gelled when swelled with a liquid electrolyte, and thus can show a high degree of swelling. The electrolyte injected after assembling a lithium ion secondary battery penetrates into the polymer binder, and the polymer binder containing the electrolyte penetrated therein also has electrolyte ion conductivity. Therefore, a polymer having a solubility index of 15 to 45 MPa^{1/2} can be preferably used as the polymer binder.

In one example, the polymer binder may be one or more compounds selected from the group consisting of polyvinylidene fluoride, poly(vinylidene fluoride-hexafluoropropylene), poly(vinylidene fluoride-trichloroethylene), poly(vinylidene fluoride-chlorotrifluoroethylene), polymethyl methacrylate, polyacrylonitrile, polyvinylpyrrolidone, polyvinyl acetate, ethylene vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pullulan, carboxymethylcellulose, acrylonitrile-styrene-butadiene copolymer, ethylene-propylene-diene terpolymer, sulfonated ethylene-propylene-diene terpolymer, styrene butadiene rubber, fluororubber, and polyimide.

The inorganic fine particles form micropores by empty spaces between particles, maintain their physical form at high temperatures, and are electrochemically stable.

The inorganic fine particles preferably undergo no oxidation and/or reduction reactions in the operating voltage range of the secondary battery (e.g., 0 ~ 5V based on Li/Li+). The inorganic fine particles preferably have a high electrolyte ion transport capability. The inorganic fine particles preferably have a density as low as possible so that they can be well dispersed within the polymer binder. **In** addition, the inorganic fine particles preferably have a high dielectric constant so as to contribute to increasing the degree of dissociation of the electrolyte salt in the electrolyte.

Preferably, the inorganic fine particles may be one or more selected from the group consisting of inorganic particles having a dielectric constant of 1 or more, inorganic particles having piezoelectricity, and inorganic particles having lithium ion transport capability.

In one example, the inorganic particles such as SrTiO₃, SnO₂, CeO₂, MgO, NiO, CaO, ZnO, ZrO₂, Y₂O₃, Al₂O₃, bohemite(AlO(OH)), Al(OH)₃, TiO₂, and SiC have a dielectric constant of 1 or more, and thus can be suitably applied as the inorganic fine particles.

In another example, the inorganic particles having piezoelectricity are nonconductors at normal pressure, but are materials that exhibit electrical conductivity due to changes in their internal structure when a certain pressure is applied. The piezoelectric inorganic particles have high dielectric constant characteristics with a dielectric constant of 100 or more. Further, they are positively (+) charged on one surface while being negatively (-) charged on the other surface, when they are stretched or compressed under the application of a certain range of pressure, thereby causing an electric potential difference between both surfaces thereof. Due to the above characteristics that the piezoelectric inorganic particles have, when an internal short circuit occurs in the electrode of a secondary battery due to external impacts, a positive electrode and a negative electrode can be prevented from being in direct contact with each other, and it is possible to gradually reduce voltage and improve safety. As the piezoelectric inorganic particles, inorganic particles such as BaTiO₃, Pb(Zr,Ti)Os (PZT), Pb₁₋ₓLaₓZr_{1-y}Ti_{y}O₃ (PLZT), Pb(Mg_{1/3}Nb_{2/3})O₃-PbTiO₃ (PMN-PT), and HfO₂ can be preferably applied.

In yet another example, the inorganic particle having the lithium ion transport capability refers to an inorganic particle that contains lithium element but has the function of moving lithium ions without storing lithium. The inorganic particles having lithium ion transport capability enable improvement of lithium ion conductivity in the battery. Examples of such inorganic particles include inorganic particles such as Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

Preferably, the inorganic fine particles may be one or more selected from the group consisting of SrTiO₃, SnO₂, CeO₂, MgO, NiO, CaO, ZnO, ZrO₂, Y₂O₃, Al₂O₃, boehmite(AlO(OH)), Al(OH)₃, TiO₂, SiC, BaTiO₃, Pb(Zr,Ti)Os, Pb₁₋ₓLaₓZr_{1-y}Ti_{y}O₃, Pb(Mg_{1/3}Nb_{2/3})O₃-PbTiO₃, HfO₂, Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

The inorganic fine particles preferably have a particle size of 0.001 *µ*m to 10 *µ*m. In order to ensure dispersibility in the porous layer, the inorganic fine particles preferably have a particle size of 0.001 *µ*m or more. However, if the particle size of the inorganic fine particles is too large, the thickness of the porous layer increases and the mechanical properties deteriorate, and an excessively large pore size may cause an internal short circuit during charge and discharge of the secondary battery. Therefore, the inorganic fine particles preferably have a particle size of 10 *µ*m or less.

According to one embodiment, the porous layer 30 may include 10 to 99% by weight of the inorganic fine particles and 1 to 90% by weight of the polymer binder. In order to impart appropriate porosity and insulation property to the porous layer, the inorganic fine particles are preferably contained in an amount of 10% by weight or more. However, if the inorganic fine particles are contained in an excessive amount, the mechanical properties of the porous layer may decrease due to weakening of adhesive force. Therefore, the inorganic fine particles are preferably contained in an amount of 99% by weight or less.

According to one embodiment, the porous layer 30 preferably has a porosity within a range suitable for exhibiting the characteristics of the porous layer. If the porosity of the porous layer is too large, an internal short circuit may occur during charge and discharge of the lithium ion secondary battery. Therefore, the porosity of the porous layer 30 is preferably 60% or less.

According to one embodiment, the thickness of the porous layer 30 is preferably adjusted in the range of 5 *µ*m to 100 *µ*m, or 5 *µ*m to 50 *µ*m, or 10 *µ*m to 50 *µ*m in order to exhibit appropriate performance.

According to one embodiment, a method of tightly bonding the electrode active material layer 15 to the porous layer 30 through the adhesive portion pattern 20 can be performed using a conventional stacking method. **In** one example, it can be performed by forming the adhesive portion pattern 20 on the electrode active material layer 15 of the electrode portion 10 and then stacking the porous layer 30 thereon under pressure.

According to one embodiment of the invention, there is provided a lithium ion secondary battery comprising the above-mentioned electrode-integrated separator 100 for a lithium ion secondary battery.

In one example, the lithium ion secondary battery may comprise an electrode assembly including a counter electrode disposed on the porous layer of the electrode-integrated separator; an electrolyte swelled in the electrode assembly; and a battery case that seals and stores the electrode assembly and the electrolyte.

As the lithium ion secondary battery comprises the above-mentioned electrode assembly, it can exhibit excellent durability and stable performance.

The lithium ion secondary battery may have various shapes, such as a prismatic shape, a cylindrical shape, or pouch shape.

The lithium ion secondary battery can be used as an energy source having improved performance and safety in the field of portable electronic devices such as mobile phones, notebook computers, tablet computers, mobile batteries, and digital cameras; and the field of transport means such as electric vehicles, electric motorcycles, and personal mobility devices.

According to one embodiment, the electrolyte can be used without particular limitation as long as it is known to be applicable to lithium ion secondary batteries in the technical field to which the present invention pertains. For example, the electrolyte may be an organic liquid electrolyte, an inorganic liquid electrolyte, a solid polymer electrolyte, a gel-type polymer electrolyte, a solid inorganic electrolyte, a molten inorganic electrolyte, or the like.

Specifically, the electrolyte may include a non-aqueous organic solvent and a lithium salt.

The non-aqueous organic solvent can be used without particular limitation as long as it can serve as a medium through which ions involved in the electrochemical reaction of the battery can move.

Specifically, the non-aqueous organic solvent includes an ester-based solvent such as methyl acetate, ethyl acetate, γ-butyrolactone, and ε-caprolactone; an ether-based solvent such as dibutyl ether and tetrahydrofuran; a ketone-based solvent such as cyclohexanone; an aromatic hydrocarbon-based solvent such as benzene and fluorobenzene; a carbonate-based solvent such as dimethyl carbonate(DMC), diethyl carbonate(DEC), methyl ethyl carbonate(MEC), ethyl methyl carbonate(EMC), ethylene carbonate(EC), and propylene carbonate(PC); an alcohol-based solvent such as ethyl alcohol and isopropyl alcohol; nitriles such as R-CN (wherein R is a C2 to C20 linear, branched or cyclic hydrocarbon group, which may contain a double-bonded aromatic ring or an ether bond); amides such as dimethylformamide; dioxolanes such as 1,3-dioxolane; sulfolane, and the like.

Among the above examples, a carbonate-based solvent can be preferably used as the non-aqueous organic solvent.

In particular, considering the charge and discharge performance of the battery and compatibility with the sacrificial positive electrode material, the non-aqueous organic solvent may be preferably a mixture of a cyclic carbonate having high ionic conductivity and a high dielectric constant (e.g., ethylene carbonate and propylene carbonate) and a linear carbonate having low viscosity carbonates (e.g., ethyl methyl carbonate, dimethyl carbonate, and diethyl carbonate). In this case, mixing and using the cyclic carbonate and the linear carbonate at a volume ratio of 1:1 to 1:9 may be advantageous for achieving the above-mentioned performance.

In addition, as the non-aqueous organic solvent, a solvent in which ethylene carbonate(EC) and ethyl methyl carbonate(EMC) are mixed at a volume ratio of 1:2 to 1:10; or a solvent in which ethylene carbonate(EC), ethyl methyl carbonate(EMC) and dimethyl carbonate(DMC) are mixed in a volume ratio of 1~3:1~9:1 can be preferably used.

The lithium salt contained in the electrolyte is dissolved in the non-aqueous organic solvent and acts as a source of lithium ions in the battery, which enables basic operation of the lithium ion secondary battery and facilitates movement of lithium ions between the positive electrode and the negative electrode.

The lithium salt may include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiFSI, LiTFSI, LiCl, Lil, and LiB(C₂O₄)₂, and the like. Specifically, the lithium salt may be LiPF₆, LiFSI, LiTFSI, and a mixture thereof.

The lithium salt may be contained in the electrolyte at a concentration of 0.1 M to 2.0 M. The lithium salt contained in the concentration range imparts appropriate conductivity and viscosity to the electrolyte, thereby exhibiting excellent electrolyte performance.

Optionally, the electrolyte may contain additives for the purpose of improving battery life characteristics, suppressing decrease of capacity in the battery, improving battery discharge capacity, and the like.

For example, the additive may include a haloalkylene carbonate-based compound such as difluoroethylene carbonate; or pyridine, triethylphosphite, triethanolamine, cyclic ether, ethylene diamine, n-glyme, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, aluminum trichloride, and the like. The additive may be contained in an amount of 0.1% by weight to 5% by weight with respect to the total weight of the electrolyte.

### [ADVANTAGEOUS EFFECTS]

According to the present invention, an electrode-integrated separator which has excellent bonding durability without impairing ionic conductivity between electrodes, and a lithium ion secondary battery including the same are provided.

### [BRIEF DESCRIPTION OF THE DRAWINGS]

FIG. 1 is a cross-sectional view of an electrode-integrated separator for a lithium ion secondary battery according to embodiments of the invention.
FIGS. 2 to 6 are transversal cross-sectional views of adhesive portion patterns according to embodiments of the invention, respectively.
FIGS. 7 and 8 are transversal cross-sectional views showing a method for calculating the area ratio of an adhesive portion pattern according to embodiments of the invention, respectively.
FIGS. 9 to 12 are scanning electron microscope (SEM) images of the surface of the negative electrode portion on which the adhesive portion pattern is formed according to embodiments of the invention, respectively.

### <Explanation of Symbols>

100: electrode-integrated separator for lithium ion secondary battery
10: electrode portion
13: electrode current collector
15: electrode active material layer
20: adhesive portion pattern
23, 25, 27: adhesive portion unit
30: porous layer
A_{U}: unit area
A_{P}: area occupied by the adhesive portion pattern within the A_{U}

### [DETAILED DESCRIPTION OF THE EMBODIMENTS]

Hereinafter, actions and effects of the invention will be described in more detail with reference to specific examples of the invention. However, this is presented as an example to aid in the understanding of the invention. The following examples are not intended to limit the scope of the invention in any way. It would be obvious to those skilled in the art that various changes and modifications can be made within the scope and technical spirit of the invention.

### Example 1

An aqueous active material slurry comprising 95.6 wt.% of an active material composed of: 90 wt.% of graphite active material in which artificial graphite and natural graphite were mixed in a ratio of 3:7 and 10 wt.% of SiO; 1 wt.% of acetylene black as a conductive material; and 1.1 wt.% of carboxymethyl cellulose (CMC) and 2.3 wt.% of styrene butadiene rubber (SBR) as the binder, was prepared. The active material slurry was coated onto one surface of a copper current collector with a thickness of 8 *µ*m using a comma coater and dried. Then, this was rolled to form a negative electrode active material layer (thickness 44 *µ*m) with a porosity of 24%.

An adhesive portion (polyvinylidene fluoride) was patterned on the negative electrode active material layer using a gravure printing device in the form shown in FIG. 7. At this time, the adhesive portion units having a circular cross section were formed to a thickness of 1 *µ*m, so that the diameter of the transversal cross section was 400 *µ*m; the distance between center parts of the adhesive portion units was 900 *µ*m; and the area ratio of the adhesive portion pattern to the total area of the negative electrode active material layer was 18%.

In order to prepare a porous layer composition, AlO(OH) as an inorganic fine particle, and dispersant DISPERBYK-111 (BYK) were mixed with N-methyl-2-pyrrolidone (NMP). Thereby, an inorganic fine particle dispersion with a solid content of 42% was prepared. At this time, the particle size (D60) of the inorganic fine particles measured using a particle size analyzer was analyzed to be 400 nm. 6 wt.% of poly(vinylidene fluoride-co-hexafluoropropylene) and 5 wt.% of dispersant DISPERBYK-111(BYK) were dissolved in NMP to prepare a binder solution. The inorganic fine particle dispersion liquid and the binder solution were uniformly mixed using a homogenizer mixer to obtain a slurry. The slurry was coated onto the negative electrode active material layer having the adhesive portion pattern formed thereon, followed by pressure lamination and drying at 130°C to obtain a negative electrode plate with a porous layer formed thereon having a thickness of 17 *µ*m and a porosity of 50% in the form shown in FIG. 1. The composition of the porous layer was 90 parts by weight of the inorganic fine particles and 10 parts by weight of the polymer binder.

The negative electrode plate was punched into a size of 31 x 43 cm using a mold punching machine to prepare a negative electrode-integrated separator.

94 wt.% of LiNiCoMnO₂ (Ni:Co:Mn=8:1:1) as a positive electrode active material, 3 wt.% of conductive carbon black (Super P; IMERYS Graphite & Carbon) as a conductive material and 3 wt.% of polyvinylidene fluoride as a binder were mixed, and the mixture was added to NMP to prepare a uniformly dispersed slurry. The slurry was coated onto one surface of an aluminum current collector, dried and rolled to prepare a positive electrode plate having a positive electrode active material layer stacked thereon. The positive electrode plate was punched into a size of 30 x 42 cm using a mold punching machine to prepare the positive electrode portion.

The positive electrode active material layer of the positive electrode portion was disposed by abutting on the porous layer of the negative electrode integrated separator. Then, an electrode assembly was manufactured by pressurizing and laminating at 90°C.

The electrode assembly was stored in a pouch to form a small-sized cell, and electrolyte was injected into the pouch to produce five lithium ion secondary batteries.

At this time, as the electrolytic solution, a solution was used in which 1.0 M LiPF₆ and 2 wt.% vinylene carbonate(VC) were dissolved in a non-aqueous organic solvent mixed with ethylene carbonate(EC) and ethyl methyl carbonate(EMC) in a volume ratio of 3:7.

### Example 2

An electrode-integrated separator and a lithium ion secondary battery including the same were produced in the same manner as in Example 1, except that when forming the adhesive portion pattern, the adhesive portion units having a circular cross section were changed so that the diameter of the transversal cross section was 400 *µ*m; the distance between the center parts of the adhesive portion units was 730 *µ*m; and the area ratio of the adhesive portion pattern to the total area of the negative electrode active material layer was 27%.

### Example 3

An electrode-integrated separator and a lithium ion secondary battery including the same were produced in the same manner as in Example 1, except that when forming the adhesive portion pattern, the adhesive portion units having a circular cross section were changed so that the diameter of the transversal cross section was 400 *µ*m; the distance between the center parts of the adhesive portion units was 630 *µ*m; and the area ratio of the adhesive portion pattern to the total area of the negative electrode active material layer was 37%.

### Example 4

An electrode-integrated separator and a lithium ion secondary battery including the same were produced in the same manner as in Example 1, except that when forming the adhesive portion pattern, the adhesive portion units having a circular cross section were changed so that the diameter of the transversal cross section was 400 *µ*m; the distance between the center parts of the adhesive portion units was 550 *µ*m; and the area ratio of the adhesive portion pattern to the total area of the negative electrode active material layer was 48%.

### Comparative Example 1

An electrode-integrated separator and a lithium ion secondary battery including the same were produced in the same manner as in Example 1, except that the porous layer was formed directly on the negative electrode active material layer without forming the adhesive portion pattern.

### Comparative Example 2

An electrode-integrated separator and a lithium ion secondary battery including the same were produced in the same manner as in Example 1, except that the adhesive portion was coated onto the whole of one surface of the negative electrode active material layer to form the adhesive portion.

### Experiment Example 1

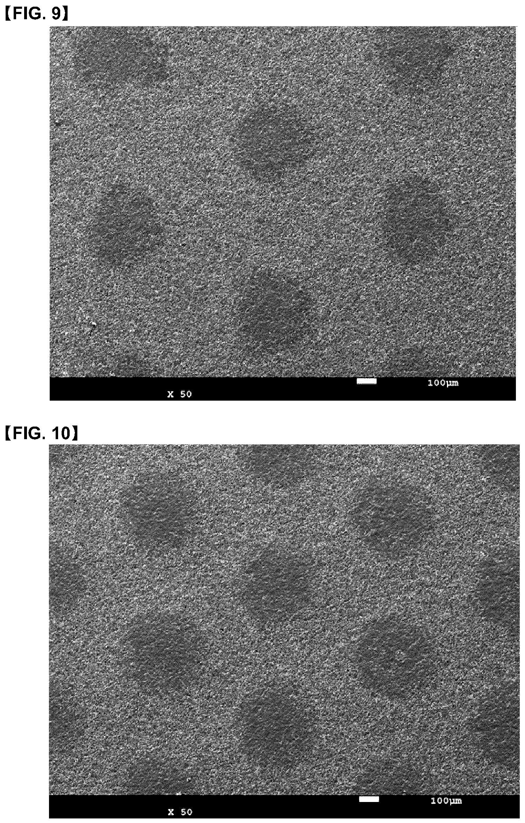

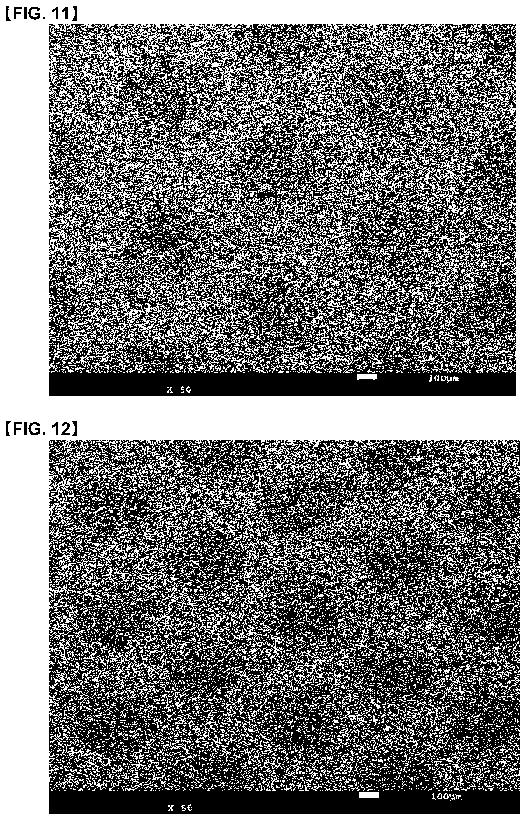

The surface of the negative electrode portion having the adhesive portion pattern formed thereon according to Examples 1 to 4 was observed using a scanning electron microscope, and the images are shown in FIG. 9 (Example 1), FIG. 10 (Example 2), FIG. 11 (Example 3), and FIG. 12 (Example 4).

### Experimental Example 2

Regarding the negative electrode-integrated separator obtained in Examples and Comparative Examples, a 180 degree peel-off strength test was performed according to the test method of ASTM D3330 (2018) using a TA-XT2 Plus device from Stable Micro Systems.

The sample (negative electrode-integrated separator) was fixed perpendicularly to the ground, and then a tape (3M Scotch Tape, width 18 mm) was attached onto the porous layer in a U-shape. One end of the tape was hooked to the grip of the device, and the strength of the force applied to the grip was measured when peeling off 180 degrees while pulling in the vertical direction of the ground (measurement speed 300 mm/min, measurement distance 5 cm). The above test was performed on five samples each, and the average value of 180 degree peel-off force is shown in Table 1 below.

**[Table 1]**

| | 180 degree peel-off force (gf/mm) |
|---|---|
| Example 1 | 0.56 |
| Example 2 | 0.57 |
| Example 3 | 0.56 |
| Example 4 | 0.58 |
| Comparative Example 1 | 0.19 |
| Comparative Example 2 | 0.61 |

In the 180 degree peel-off strength test, it was confirmed that in the negative electrode-integrated separators of Examples, peeling of the porous layer did not occur, and the tape was peeled off smoothly. In contrast, it was confirmed that in the negative electrode-integrated separator of Comparative Example 1, the porous layer peeled off from the negative electrode portion, and stick-slip behavior occurred irregularly.

### Experimental Example 3

The lithium ion secondary batteries (5 samples each) obtained in Examples and Comparative Examples were charged at 0.1 C (reference capacity 4.5 mAh/cm²) in a CC-CV mode at 25°C until the voltage reached 4.2 V, and the voltage was maintained in a CV mode until it reached 0.05 C. Subsequently, a formation process was performed by discharging to 2.5 V at 0.1 C, and the discharge capacity (mAh) and the ionic conductivity (mS/cm) are shown as an average of the five samples in Table 2 below.

During the formation process, the number of defective samples in which charge and discharge did not occur normally due to short circuits among the respective five samples produced in Examples and Comparative Examples was confirmed, and is shown in Table 2 below.

**[Table 2]**

| | Discharge | Ionic conductivity | Number of defective |
|---|---|---|---|
| | capacity (mAh) | (mS/cm) | samples (unit) |
| Example 1 | 57.4 | 0.77 | 0 |
| Example 2 | 56.5 | 0.75 | 0 |
| Example 3 | 55.7 | 0.71 | 1 |
| Example 4 | 54.3 | 0.66 | 0 |
| Comparative Example 1 | 69.5 | 0.89 | 5 |
| Comparative Example 2 | 20.6 | 0.65 | 1 |

Referring to Table 2, the lithium ion secondary batteries of Examples not only exhibited high discharge capacity, but also exhibited excellent assembly stability with no defects due to a short circuit between the positive electrode portion and the negative electrode portion.

The lithium secondary battery of Comparative Example 1 exhibited a high level of discharge capacity, but the adhesive portion was not applied and thus, the short circuit rate of the electrode was high.

The lithium secondary battery of Comparative Example 2 exhibited the lowest level of discharge capacity and ionic conductivity as the adhesive portion was introduced throughout the negative electrode active material layer.

While the present invention has been described in detail with reference to specific embodiments and illustrative drawings, the present invention is not limited thereto, and it will be apparent to those skilled in the art that various changes and modifications can be made within the spirit and scope of the disclosure as defined by the appended claims.

## Claims

1. An electrode-integrated separator for a lithium ion secondary battery comprising:
an electrode portion including an electrode active material layer stacked on an electrode current collector;
an adhesive portion pattern formed on the electrode active material layer; and
a porous layer that is tightly bonded to the electrode active material layer through the adhesive portion pattern, and includes a polymer binder and inorganic fine particles dispersed in the polymer binder.

2. The electrode-integrated separator for a lithium ion secondary battery of claim 1, wherein the adhesive portion pattern is formed at an area ratio of 15% to 50% based on a total area of the electrode active material layer.

3. The electrode-integrated separator for a lithium ion secondary battery of claim 1, wherein the adhesive portion pattern includes four or more adhesive portion units.

4. The electrode-integrated separator for a lithium ion secondary battery of claim 3, wherein the adhesive portion units each independently have one or more transversal cross-sectional shapes selected from the group consisting of a circle, an ellipse, a sector, a polygon, and a concave polygon.

5. The electrode-integrated separator for a lithium ion secondary battery of claim 3, wherein the adhesive portion units are configured such that a center part of each adhesive portion unit is arranged at equal intervals.

6. The electrode-integrated separator for a lithium ion secondary battery of claim 3, wherein the adhesive portion units are arranged at intervals such that a distance between a center parts of each adhesive portion unit is 100 *µ*m to 1500 *µ*m.

7. The electrode-integrated separator for a lithium ion secondary battery of claim 3, wherein the transversal cross section of the adhesive portion units has a major axis diameter of 20 *µ*m to 5000 *µ*m.

8. The electrode-integrated separator for a lithium ion secondary battery of claim 1, wherein the adhesive portion pattern includes one or more selected from the group consisting of polyvinylidene fluoride, poly(vinylidene fluoride-hexafluoropropylene), poly(vinylidene fluoride-trichloroethylene), poly(vinylidene fluoride-chlorotrifluoroethylene), polymethyl methacrylate, polyacrylonitrile, polyvinylpyrrolidone, polyvinyl acetate, ethylene vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pullulan, carboxymethylcellulose, acrylonitrile-styrene-butadiene copolymer, ethylene-propylene-diene terpolymer, sulfonated ethylene-propylene-diene terpolymer, styrene butadiene rubber, fluororubber, and polyimide.

9. The electrode-integrated separator for a lithium ion secondary battery of claim 1, wherein the porous layer includes 10 to 99% by weight of the inorganic fine particles and 1 to 90% by weight of the polymer binder.

10. The electrode-integrated separator for a lithium ion secondary battery of claim 1, wherein the polymer binder is one or more selected from the group consisting of polyvinylidene fluoride, poly(vinylidene fluoride-hexafluoropropylene), poly(vinylidene fluoride-trichloroethylene), poly(vinylidene fluoride-chlorotrifluoroethylene), polymethyl methacrylate, polyacrylonitrile, polyvinylpyrrolidone, polyvinyl acetate, ethylene vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pullulan, carboxymethyl cellulose, acrylonitrile-styrene-butadiene copolymer, ethylene-propylene-diene terpolymer, sulfonated ethylene-propylene-diene terpolymer, styrene butadiene rubber, fluororubber, and polyimide.

11. The electrode-integrated separator for a lithium ion secondary battery of claim 1, wherein the inorganic fine particles are one or more selected from the group consisting of SrTiO₃, SnO₂, CeO₂, MgO, NiO, CaO, ZnO, ZrO₂, Y₂O₃, Al₂O₃, boehmite (AlO(OH)), Al(OH)₃, TiO₂, SiC, BaTiO₃, Pb(Zr,Ti)O₃, Pb₁₋ₓLaₓZr_{1-y}Ti_{y}O₃, Pb(Mg_{1/3}Nb_{2/3})O₃-PbTiO₃, HfO₂, Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

12. The electrode-integrated separator for a lithium ion secondary battery of claim 1, wherein the inorganic fine particles have a particle size of 0.001 *µ*m to 10 *µ*m.

13. A lithium ion secondary battery comprising the electrode-integrated separator of claim 1.
